# EUROPEAN PATENT SPECIFICATION

(11) **EP 1 501 367 B1**
(45) Date of publication and mention of the grant of the patent: **05.10.2011**
(21) Application number: 03722452.4
(22) Date of filing: 11.04.2003
(51) Int. Cl.: A23D 7/00, A23L 1/30

(54) **FOOD PRODUCT COMPRISING A PHYTOSTEROL**
NAHRUNGSMITTEL ENTHALTEND EIN PHYTOSTEROL
PRODUIT ALIMENTAIRE COMPRENANT UN PHYTOSTEROL

(30) Priority: 03.05.2002 EP 02076794
(43) Date of publication of application: 02.02.2005
(73) Proprietor: Unilever N.V., 3013 AL Rotterdam (NL); Unilever PLC, London EC4Y 0DY (GB)
(72) Inventor: DE GROOT, Willem A., 4207 RC Gorinchem (NL)
(74) Representative: Corsten, Michael Allan
(86) International application number: PCT/EP2003/003789
(87) International publication number: WO 2003/092394

(56) References cited:
- EP-A- 0 990 391
- NIELSEN, J. H., OLSEN, K. E., JENSEN, C. AND SKIBSTED, L. H.: "Cholesterol oxidation in butter and dairy spread during storage" JOURNAL DAIRY RESEARCH, vol. 63, 1996, pages 159-167, XP008008927 CAMBRIDGE, GB
- KOCHHAR S P: "INFLUENCE OF PROCESSING ON STEROLS OF EDIBLE VEGETABLE OILS" PROGRESS IN LIPID RESEARCH, PERGAMON PRESS, PARIS, FR, vol. 22, no. 3, 1983, pages 161-188, XP000600909 ISSN: 0163-7827

## Description

### Field of the invention

The invention relates to a food product comprising from 35 to 90 wt% fat and a phytosterol.

### Background to the invention

Since several years consumers are interested in reduction of their blood cholesterol level because high blood cholesterol level is believed to contribute to heart disease.

Sterols occur widely in plants and animals and are important compounds in the human diet. Cholesterol, which is the dominant sterol in animal food products, has often been associated with the incidence of coronary heart diseases. In vegetable oils, more varying and complex mixtures of sterols occur. The sterols from vegetable origin are generally called plant sterols or phytosterols. Phytosterols have demonstrated a blood cholesterol lowering effect and have therefore been proposed as therapeutic agents for hypercholesterolemia. It has been shown frequently now that when plant sterols are added to food products at a level of 8% they will lower LDL-cholesterol on average by 10% (Weststrate J.A. and Meijer G.W. Eur. J. Clin. Nutr. 52 (1998) 334-343. "Plant sterol-enriched margarines and reduction of plasma total- and LDL-cholesterol concentrations in normocholesterolemic and mildly hypercholesterolemic subjects.")

Furthermore for example EP-A-594612, and EP-A-829434 disclose food products comprising as the active component a phytosterol. WO03/013275 (non republished) discloses products for lowering blood cholesterol.

WO99/59421 describes the use of esterified and subsequently hydrogenated phytosterol in foods.

WO00/41491 describes food products supplemented with plant sterols.

Consumption of these products on a regular basis in the prescribed amounts is claimed to lead to a reduction in blood cholesterol.

Besides reduction of cholesterol level in blood, individual consumers are also interested in health aspects of oil containing food products. It is generally known that polyunsaturated fatty acids forming the building blocks of some triglyceride oils, also contribute to cholesterol lowering. Therefore products comprising both phytosterols and a considerable amount of polyunsaturated fatty acids have been developed. Examples of such products are Becel pro activ^{tm} spreads. Such products are for example described in EP-A-828434.

It is known that both polyunsaturated fatty acids and phytosterols are prone to oxidation under certain conditions. For example a high temperature treatment of such products when used in shallow frying or deep frying (see EP-A-771531) can potentially lead to oxidation of both polyunsaturated fatty acids and phytosterols. The resulting products in some cases suffer from off taste.

Cholesterol and the main phytosterols (sitosterol, stigmasterol, and campesterol) all belong to the same class of sterols, the 4-desmethyl sterols. Based on the ample amount of information published concerning the oxidation of cholesterol, it has been known for several decades that sterols can be oxidised to so-called oxysterols or sterol oxides. This is attributed to the presence of an unsaturated B-ring in the 4-desmethylsterols. The oxidation is believed to proceed according to a classical auto-oxidation mechanism, analogous to the oxidation of unsaturated fatty acids. The oxidation of sterols, however, proceeds much slower than the oxidation of mono-unsaturated fatty acids, due to steric hindrance in the sterol moiety.

It is an object of the current invention to provide a product suitable for shallow frying comprising both (poly) unsaturated fatty acids in the form of triglyceride, and phytosterols wherein the composition is such that both the slow oxidation of sterols and the regular oxidation of fatty acids is limited.

### Summary of the invention

It has surprisingly been found that fat based food products comprising a specific amount of salt and lecithin and an aqueous phase with a moderately acidic pH, show reduced oxidation of both sterols and unsaturated fatty acids upon shallow frying.

Accordingly the invention relates to a food product suitable for shallow frying comprising from 35 to 90 wt% fat, from 8 to 16 wt% (on total product weight) of a phytosterol, which is a fatty acid ester of beta sitostanol or a derivative thereof, an aqueous phase, salt and lecithin characterised in that the amount of lecithin is from 0.1 to 0.8 wt%, the amount of salt is from 0.2 to 5 wt%, in that the pH of the aqueous phase is from 4.5 to 6.5 and in that the product optionally comprises a thickener in an amount of at most 1 wt%, with the proviso that the food product is not a spread of the following compositions:

### Spread

| **Ingredients** | **%** |
|---|---|
| **Oil Phase** | **40.00** |
| Canola Oil | 19.08 |
| Bean Oil | 1.77 |
| Partially hydrogenated bean oil, melting point 42°C | 5.70 |
| Lecithin | 0.22 |
| Saturated distilled monoglyceride (iodine value <5) | 0.22 |
| Flavor | Trace |
| STEROL ESTER | 13.01 |
| Vitamin A | 0.01 |
| | |
| **Aqueous phase** | **60.00** |
| Water | 35.13 |
| Salt | 1.50 |
| Lactic Acid | 0.09 |
| Potassium Sorbate | 0.11 |
| Calcium disodium EDTA | 0.01 |
| Pork Gelatin | 2.00 |
| NOVOSOY® 40 | 0.5 |
| SUPRO® (Soy protein isolate) | 15 |
| Beta tricalcium phosphate | 1.88 |
| Xanthan gum | 0.10 |
| Artificial color Yellow 5 | 0.04 |
| Titanium dioxide | 0.28 |
| Vitamin mix B6, B12 & E | 0.07 |
| | |
| Total | 100.00 |

or

### Spread-low calcium

| **Ingredients** | **Parts by weight** |
|---|---|
| **Oil Phase** | 40.00 |
| Canola Oil | 19.08 |
| Bean Oil | 1.77 |
| Partially hydrogenated bean oil, melting point 42°C | 5.70 |
| Lecithin | 0.22 |
| Saturated distilled monoglyceride (iodine value <5) | 0.22 |
| Flavor | Trace |
| STEROL ESTER | 13.01 |
| Vitamin A | 0.01 |
| | |
| **Aqueous phase** | **60.00** |
| Water | 35.13 |
| Salt | 1.50 |
| Lactic Acid | 0.09 |
| Potassium Sorbate | 0.11 |
| Calcium disodium EDTA | 0.01 |
| Pork Gelatin | 2.00 |
| NOVOSOY® 40 | 0.5 |
| SUPRO® (Soy protein isolate) | 15 |
| Xanthan gum | 0.10 |
| Artificial color Yellow 5 | 0.04 |
| Titanium dioxide | 0.28 |
| Vitamin mix B6, B12 & E | 0.07 |

Wherein these spreads are prepared by the following procedure except that tricalcium phosphate addition is omitted in the low calcium spread.

The oil phase is prepared by heating the liquid oil and partially hydrogenated bean oil in a tank to 65°C. The emulsifiers, lecithin and monoglycerides are mixed and the mixture is held for 30 minutes to completely melt the fat crystals.

Vitamin A, flavor are added to the heated oil phase.

The aqueous phase is prepared by adding xanthan gum to the water at 40°C in a tank. After hydrating the gum for 15 minutes, tricalcium phosphate is dispersed.

All the other dry ingredients are added and mixed with a high shear mixer to obtain a homogeneous aqueous phase. The contents in the tank are batch pasteurized by heating to 80°C and holding for 5 minutes and cooled to 55°C.

The fat and aqueous phases are mixed together at approximately 55°C in a heated tank in a ratio of approximately 40 parts fat phase to 60 parts aqueous phase. This emulsion is water continuous. The emulsion is then passed through a cooled, scraped-surface heat exchanger (A-unit) where the emulsion is cooled to a temperature where the fat will begin to crystallize (few degrees C below the alpha point 4°C) and the aqueous phase will begin to gel, if the aqueous phase has the gelling agents, and/or there is increase in viscosity if only thickening agents are present in the aqueous phase. The cooled emulsion is then passed into a slowly agitated, variable speed crystallizer (C*-unit) where the product is inverted from a water-continuous emulsion to a fat-continuous emulsion by quickly increasing the shaft speed. The inversion is aided by injecting 100% fat into the system. The C* unit is referred to as the inverter unit. The inverter speed is 1000 rpm. The shaft speed in the inverter unit depends on its dimensions but normally varies from 200-2000 rpm. The fat continuous emulsion is passed into an additional C unit running at shaft speed of 300 rpm to provide gentle mixing while the fat continues to crystallize from the alpha to beta prime form.

In a further aspect the invention relates to the use of such food products in shallow frying.

### Detailed description of the invention

Where percentages are used in the specification and claims, these are weight percentages unless otherwise is indicated. The weight percentages are calculated on total product weight unless otherwise is indicated.

The products according to the invention are suitable for shallow frying. Well-known shallow frying media are butter and margarine (pourable or solid in tub or wrapper). The food products according to the invention may be used as alternatives to such traditional shallow frying media. The products comprise an aqueous phase and a fat phase. The products comprise from 35 to 90 wt% fat. At lower fat percentage it was found that the products do not show the desired frying characteristics; especially resulting in low oil amount in the frying pan and an increased tendency to spattering for some formulations.

Spattering of a water and oil-containing product, especially where the continuous phase is the fat phase is believed to be caused by superheating of water droplets. At a certain point after heating water droplets explosively evaporate, whereby the product can be spread all over the surroundings of a frying pan in which the emulsion is heated. This may cause danger to the person who fries foodstuff in the heated emulsion and it may cause a mess in the kitchen.

Phytosterol in the context of the invention is defined according to the definition used by Kochhar in Prog Lip Res Vol 22, (1983) pp 161-164, and includes their saturated equivalents. Esterified derivatives such as phytosterols or stanols esterified to fatty acids are also encompassed in the invention. Methods for esterification of phytosterols are for example disclosed in WO-A-98/38206 and EP-A-594612.

The preferred phytosterols are selected from the group comprising beta sitosterol, beta sitostanol, stigmasterol, stigmastanol, campesterol and campestanol or their mixtures and their esters of fatty acids.

Most preferably the phytosterol is a fatty acid ester of beta sitosterol or beta sitostanol or a derivative thereof.

The fatty acids suitable for esterification are preferably selected from fatty acids derived from soy bean oil, rapeseed oil, palm oil, sunflower oil, corn oil, safflower oil, cotton seed oil, palmkernel oil, coconut oil, linseed oil, butter or fractions thereof, or lauric oils or a combination thereof. Most preferred the fatty acid is derived from sunflower oil or rapeseed oil.

The amount of phytosterol is from 3 to 15 wt% on basis of the weight of the underivatised phytosterol. Preferably the amount is from 5 to 10 wt%, more preferred from 7 to 9 wt% on total product weight. In a preferred embodiment the phytosterol is a phytosterolester added in an amount of from 8 to 16 wt% on total product weight.

Compositions according to the invention show reduced levels of oxidized products during and after shallow frying. Preferably the level of steroloxide is less than 500 mg/kg original product. Even more preferred the level is below 400 mg/kg, most preferred below 300 mg/kg.

It was found that increased salt levels lead to reduced oxidation during shallow frying of both the phytosterols and the fatty acids derived from triglycerides present in the food product according to the invention. Therefore the amount of salt is from 0.2 to 5 wt%, preferably from 0.5 to 5 wt%. More preferably the amount of salt is from 1 to 5 wt%, even more preferably from 2 to 3 wt%. The salt can be any food grade salt. Suitable salts are for example selected from the group comprising sodium chloride, potassium chloride, calcium chloride and combinations thereof.

Preferred salts are those that do act physically as a salt but do not (or to a lesser extent than NaCl) impart a salty impression to the product. Examples of such salts are potassium chloride and potassium citrate.

For most applications, especially in countries where consumers like salty frying products, NaCl is the preferred salt.

The presence and amount of lecithin in the food products according to the invention is of critical importance to the level of oxidation. It was found that if the level of lecithin is from 0.1 to 0.8 wt%, the products show reduced oxidation of both the phytosterol and the fatty acid moiety. Low levels, below 0.1 wt% and also high levels, above 0.8 wt%, were found to lead to increased levels of oxidation, especially of the phytosterol moiety. It is preferred to use lecithin at a level of from 0.1 to 0.7 wt%, more preferred from 0.2 to 0.5 wt%.

For the purpose of the invention, lecithins, which comprise phosphoacylglycerols, can be divided in three groups according to their preparation. The first group is formed by native lecithins such as Bolec ZT^{tm}. Native lecithins are for example obtained from triglyceride oils, which have been filtered, extracted and stripped.

The native lecithins can be separated from the oils by use of their affinity for water, this rendering them oil insoluble. According to another, more preferred definition, native lecithins are those which have a phosphatidylcholine to phosphatidylethanolamine ratio of at most 1.3, in combination with the total amount of lysophosphatides being at most 5 wt% of all phosphatides making up the native lecithin composition. The second group of lecithins is formed by (partly) hydrolysed lecithins, which originate from native lecithins, which have been hydrolysed for example by use of the enzyme phospholipase A or by chemical hydrolysis. Hydrolysed lecithins can also be prepared by chemical synthesis.

A third group of lecithins comprises fractionated lecithins such as the alcohol soluble fraction of native lecithins such as cetinol^{tm} .

This type of lecithin can be obtained in a process wherein native lecithins are extracted with alcohol.

Examples of these three groups of lecithins are:
native lecithine: Bolec ZT(^{tm})_{,} Adlec(^{tm}), Sterpur PM(^{tm}); hydrolyzed lecithine BOLEC MT(^{tm}), Sterpur E(^{tm}), Adlec E(^{tm}); fractionated lecithin: Cetinol(^{tm}), Nathin 3-KE(^{tm}).

For the purpose of the invention lecithins are from vegetable origin.

Lecithins in each group can optionally be de-oiled lecithins. In a preferred embodiment of the invention, the lecithin is an alcohol soluble fraction of a lecithin.

The aqueous phase of the products is characterised by a pH of from 4.5 to 6.5, preferably from 4.7 to 6.5. More preferably the aqueous phase has a pH of from 4.8 to 6.2, preferably from 5 to 6. Such pH is for example obtained by the addition of an acid. Suitable acids include lactic acid, citric acid, hydrochloric acid. The preferred acid is citric acid.

The products comprise from 35 to 90 wt% fat. Preferred products are those which comprise from 40 to 90 wt% fat, more preferred from 60 to 90 wt% fat, most preferred from 60 to 80 wt% fat. Especially preferred the products are fat continuous. Such products were found to be most suitable for shallow frying.

In an even more preferred embodiment the invention relates to a fat continuous food product suitable for shallow frying, comprising from 60 to 90 wt% fat, from 10 to 15 wt% of a phytosterol fatty acid ester, an aqueous phase, salt and lecithin wherein the amount of lecithin is from 0.2 to 0.5 wt%, the amount of salt is from 0.5 to 3 wt%, and wherein the pH of the aqueous phase is from 4.8 to 6.5.

Optionally the food product comprises a thickener. Thickeners such as alginate, starch, gelatinised starch, gums including gellan gum, locust bean gum, xanthan gum or combinations thereof are commonly used to provide texture and/or viscosity in low fat food products. It was however found that such compositions tended to increase the level of oxidation of phytosterols in shallow frying products and therefore they are preferably essentially absent in the food products according to the invention. Small amounts of at most 1 wt% are in most formulations tolerable though less preferred. In the context of the invention essentially absent is defined as less than 0.1, preferably less than 0.01 wt%.

Generally shallow frying products comprise an emulsifier to assist in the homogeneous admixture of aqueous phase and fat phase. Suitable emulsifiers are preferably selected from the group comprising saturated or unsaturated monoglycerides, saturated or unsaturated diglycerides, polyoxysorbitanesters, citric acid esters, lactic acid esters or a combination thereof. Preferably the food product comprises a monoglyceride, more preferred a saturated monoglyceride.

For improvement of taste and to impart nutritional value, the products optionally comprise a protein. Said protein can be of vegetable or dairy origin whereby dairy origin is preferred.

Dairy proteins are suitably selected from sources such as milk protein, whey protein, skim milk powder, whey powder, sweet whey (powder), buttermilk or butter milk powder or a combination thereof. The amount of such protein is for example from 0.2 to 3, preferably from 0.5 to 2 wt%.

In an alternative embodiment the products comprise one or more well known antioxidants. These were found especially suitable for reduction of oxidation of fatty acids. Examples of well known antioxidants are propylgallate, tocopherol, ascorbic acid (ester).

Such compositions are especially suitable for use at increased pH over 5.3.

In order to further improve the oxidative stability of the products, especially of the unsaturated fatty acids contained therein, a sequestrant such as EDTA or citric acid is optionally added.

The food products are suitable for shallow frying. The products may be pourable or spreadable. Spreadable products are preferred. In addition to the above described ingredients the products may comprise optional ingredients that are commonly used in shallow frying agents. Such ingredients include but are not limited to colouring agents, flavour components, preservatives such as potassium sorbate, herb, fruit or nut particles, and healthy ingredients such as vitamins, fibres.

The fat phase of the food products is formed by any suitable fat or fat blend. It will be appreciated that pourable products require a different fat composition than spreadable products. Guidance on composition of the fat blend is provided below.

The known pourable frying products fat blend usually consists of a mixture of an oil, a fat which at ambient temperature is fully liquid, and a fat which is solid at ambient temperature, the so-called hardstock. The ratio of liquid and solid fat is chosen such that after proper processing together with an aqueous phase a product with a suitable squeezable or pourable consistency is obtained. The presence of hardstock fat in liquid frying products aims to contribute to stabilisation of the emulsion.

The solid fat crystals, which are needed for the stability of the emulsion, on the other hand may adversely affect its pourability. Liquid frying products manufacture therefore requires a hardstock fat with properties that are delicately balanced. Any suitable hardstock may be used.

Fully hydrogenated high erucic rapeseed oil (shortly denoted as fully hardened rapeseed oil or RPh70) is a well known hardstock fat which complies with the above specification. It is suited for the manufacture of satisfactory liquid or squeezable frying products, which combine good stability with good pourability. However also other hardstocks may be used such as (partially) hydrogenated sunflower seed oil with a melting point of about 69 °C, soy bean oil with a melting point of about 65 °C, palm oil with a melting point of about 58°C, arachidic oil with a melting point of about 60 °C and cotton seed oil with a melting point of about 62°C. Combinations of one or more of these hardstock fats or interesterified blends of these fats may also be suitably applied. Presently, from all above-mentioned fats mainly fully hardened rapeseed oil is employed for the commercial preparation of high quality liquid frying products. Its use is described e.g. in US 5,756,142. Most liquid or squeezable frying products are prepared with 1.5 - 5 wt.% hardstock fat on total product.

In addition to the hardstock the fat blend comprises a relatively low melting fat.

As the low melting fat an oil rich in triglycerides comprising (poly) unsaturated fatty acid residues is highly preferred. Therefore the low melting fat is preferably selected from the group comprising sunflower oil, soybean oil, rapeseed oil, cottonseed oil, olive oil, corn oil, groundnut oil, or low melting butterfat fractions and/or combinations thereof. These fats may be partially hydrogenated.

The fat blend for a spreadable product preferably comprises a hardstock fat and a liquid oil. The hardstock is preferably a saturated fat or a fat of which at least about 75% of the fatty acids are saturated fatty acids. Optionally the hardstock fat is an interesterified fat. The liquid oil is preferably an oil high in polyunsaturated fatty acids such as rapeseed oil, sunflower oil, olive oil, sesame oil, safflower oil, linseed oil, soy bean oil, linola oil or a combination thereof.

The food products may be prepared by any suitable process. To prepare a pourable product, for example a premix comprising all ingredients is prepared, followed by blending and mixing in order to establish a suitable emulsion. If desired the crystallisation of solid fat if present may either be performed a priory or as a processing step in which the premix is cooled by one or more scraped surface heat exchangers. In such a step also the process of emulsification by homogenisation could take place. Emulsification could on the other hand as well be envisaged by other kinds of techniques as, e.g. membrane emulsification and alike.

If a small amount of hardened fat such as hardened rapeseed oil is present in the final product, a preferred process comprises the steps of melting triglyceride oil in shear mixer such as an A unit^{tm}, cooling to below the alpha crystallisation temperature and subsequently, or prior to cooling, mixing the triglyceride oil with the aqueous phase.

The resulting product is preferably stored at a temperature from 0 to 15°C.

For the preparation of a spreadable product, it is preferred that a premix is prepared at a temperature of about 40 to 70 °C such that the fats are melted. The composition is then processed through a high shear unit with simultaneous cooling, which is optionally repeated, followed by processing in a pin stirrer and storage of the final product at a temperature from 0 to 15°C.

In a further embodiment the invention relates to use of the product according to the invention in shallow frying of foodstuff. Preferably the product is used in an amount of about 5 to 50 g and heated to about 150 °C before foodstuff to be fried is put in.

The invention is now illustrated by the following non-binding examples.

### Examples

### General

### Determination of spattering value

The spattering behaviour of food products according to the invention was evaluated after storage of the products 8 days at 5 °C and finally 16 h of tempering at 15°C.

Primary spattering (SV1) was assessed under standardised conditions in which an aliquot (31.6 g) of the food product was heated in a glass dish and the amount of fat spattered onto a sheet of paper held above the dish was assessed after the water content of the food product had been driven off by heating.

In assessment of the spattering value about 31.6 g food product was heated in a glass dish on an electric plate set at about 205°C. The fat that spattered out of the pan by force of expanding evaporating water droplets was caught on a sheet of paper situated above the pan. The image obtained after 20 minutes was compared with a set of standard pictures number 0-10 whereby the number of the best resembling picture was recorded as the spattering value. 10 indicates no spattering and zero indicates very bad spattering. The general indication is as follows.

| *Score* | *Comments* |
|---|---|
| 10 | Excellent |
| 8 | Good |
| 6 | Passable |
| 4 | Unsatisfactory for SV1, almost passable for SV2 |
| 2 | Very poor |

Typical result for household margarines (80 wt% fat) is 8 for primary spattering (SV1).

### Analysis of sterol oxide level

The method used is based on the method described by Dutta and Appelqvist, 1997 (Dutta P.C. and Appelqvist L.-A. JAOCS 74 (1997) 647-657. "Studies on phytosterol oxidation products. I: Effect of storage on the content in potato chips prepared in different vegetable oils.").

After heating the product for 15 minutes at approx. 180 °C in a frying pan, fat extracts were prepared if necessary, a cold saponification procedure was applied and the unsaponifiables were extracted. Subsequently the sterol oxides were separated from the bulk of sterols and other unsaponifiables by HPLC and the sterol oxide fraction was subjected to GC, where they were identified by MS and quantified by FID.

### Processing

A premix of all ingredients was prepared at a temperature of 60 °C. The composition was then processed through a high shear unit with simultaneous cooling, which was repeated, followed by processing in a pin stirrer and storage of the final product at 5°C.

The products contain about 60 wt% fat and 8% phytosterols expressed as wt% free phytosterols. The sterols are present in the form of fatty acid esters of mainly beta-sitosterol, campesterol and stigmasterol with fatty acids derived from sunflower oil.

### Detailed product composition is shown in table 1

**Table 1 Ingredient**

| Ingredients | Example 1, wt% | 2 | 3 | 4 | Comparative example |
|---|---|---|---|---|---|
| **Fat phase** | | | | | |
| Fat blend | 54 | 54 | 54 | 54 | 54 |
| Sterolester | 13.3 | 13.3 | 13.3 | 13.3 | 13.3 |
| Lecithin (cetinol) | 0.27 | 0.12 | 0.27 | 0.5 | 0.05 |
| Propylgallate | 0.0 | 0.0 | 0.0 | 0.005 | 0.005 |
| **Aqueous phase** | | | | | |
| Salt (NaCl) | 3.0 | 1.28 | 0.55 | 2.0 | 0.2 |
| Thickener (Paselli starch) | 0.0 | 0.0 | 0.0 | 0.0 | 1.86 |
| Sequestrant (EDTA) | 0.0 | 0.0 | 0.0 | 0.025 | 0.005 |
| Citric acids | 0.039 | 0.020 | 0.039 | 0.0 | 0.0 |
| pH | 4.7 | 5.3 | 5.9 | 5.5 | 3.5 |

The fat used was a combination of a hardstock fat which was an interesterified blend of palm oil and palm kernel oil fractions and a liquid oil which was sunflower oil.

The total is made to 100 wt% by addition of water.

Results are presented in table 2

| Example | Steroloxide formed (mg per kg spread) | Oxidation of fat Determined by tasting |
|---|---|---|
| 1 | 66 | Good Taste |
| 2 | 83 | Good Taste |
| 3 | 116 | Good Taste |
| 4 | 180 | Good Taste |
| Comparative example | 1565 | Rejected because of off taste |

## Claims

1. Food product suitable for shallow frying comprising from 35 to 90 wt% fat, from 8 to 16 wt% (on total product weight) of a phytosterol, which is a fatty acid ester of beta sitostanol or a derivative thereof, an aqueous phase, salt and lecithin **characterised in that** the amount of lecithin is from 0.1 to 0.8 wt%, the amount of salt is from 0.2 to 5 wt%, **in that** the pH of the aqueous phase is from 4.5 to 6.5 and **in that** the product optionally comprises a thickener in an amount of at most 1 wt%, with the proviso that the food product is not a spread of the following compositions prepared by the following procedure:
*Spread*
| **Ingredients** | **%** |
|---|---|
| **Oil Phase** | **40.00** |
| Canola Oil | 19.08 |
| Bean Oil | 1.77 |
| Partially hydrogenated bean oil, melting point 42°C | 5.70 |
| Lecithin | 0.22 |
| Saturated distilled monoglyceride (iodine value <5) | 0.22 |
| Flavor | Trace |
| STEROL ESTER | 13.01 |
| Vitamin A | 0.01 |
| | |
| **Aqueous phase** | **60.00** |
| Water | 35.13 |
| Salt | 1.50 |
| Lactic Acid | 0.09 |
| Potassium Sorbate | 0.11 |
| Calcium disodium EDTA | 0.01 |
| Pork Gelatin | 2.00 |
| NOVOSOY® 40 | 0.5 |
| SUPRO® (Soy protein isolate) | 15 |
| Beta tricalcium phosphate | 1.88 |
| Xanthan gum | 0.10 |
| Artificial color Yellow 5 | 0.04 |
| Titanium dioxide | 0.28 |
| Vitamin mix B6, B12 & E | 0.07 |
| | |
| Total | 100.00 |
or
*Spread-low* calcium
| **Ingredients** | **Parts by weight** |
|---|---|
| **Oil Phase** | **40.00** |
| Canola Oil | 19.08 |
| Bean Oil | 1.77 |
| Partially hydrogenated bean oil, melting point 42°C | 5.70 |
| Lecithin | 0.22 |
| Saturated distilled monoglyceride (iodine value <5) | 0.22 |
| Flavor | Trace |
| STEROL ESTER | 13.01 |
| Vitamin A | 0.01 |
| | |
| **Aqueous phase** | **60.00** |
| Water | 35.13 |
| Salt | 1.50 |
| Lactic Acid | 0.09 |
| Potassium Sorbate | 0.11 |
| Calcium disodium EDTA | 0.01 |
| Pork Gelatin | 2.00 |
| NUVOSOY® 40 | 0.5 |
| SUPRA® (Soy protein isolate) | 15 |
| Xanthan gum | 0.10 |
| Artificial color Yellow 5 | 0.04 |
| Titanium dioxide | 0.28 |
| Vitamin mix B6, B12 & E | 0.07 |
wherein the proviso applies to these spreads prepared by the following procedure except that tricalcium phosphate addition is omitted in the low calcium spread.
The oil phase is prepared by heating the liquid oil and partially hydrogenated bean oil in a tank to 65°C. The emulsifiers, lecithin and monoglycerides are mixed and the mixture is held for 30 minutes to completely melt the fat crystals.
Vitamin A, flavor are added to the heated oil phase.
The aqueous phase is prepared by adding xanthan gum to the water at 40°C in a tank. After hydrating the gum for 15 minutes, tricalcium phosphate is dispersed.
All the other dry ingredients are added and mixed with a high shear mixer to obtain a homogeneous aqueous phase. The contents in the tank are batch pasteurized by heating to 80°C and holding for 5 minutes and cooled to 55°C.
The fat and aqueous phases are mixed together at approximately 55°C in a heated tank in a ratio of approximately 40 parts fat phase to 60 parts aqueous phase.
This emulsion is water continuous. The emulsion is then passed through a cooled, scraped-surface heat exchanger (A-unit) where the emulsion is cooled to a temperature where the fat will begin to crystallize (few degrees C below the alpha point 4°C) and the aqueous phase will begin to gel, if the aqueous phase has the gelling agents, and/or there is increase in viscosity if only thickening agents are present in the aqueous phase. The cooled emulsion is then passed into a slowly agitated, variable speed crystallizer (C*-unit) where the product is inverted from a water-continuous emulsion to a fat-continuous emulsion by quickly increasing the shaft speed. The inversion is aided by injecting 100% fat into the system. The C* unit is referred to as the inverter unit. The inverter speed is 1000 rpm. The shaft speed in the inverter unit depends on its dimensions but normally varies from 200-2000 rpm. The fat continuous emulsion is passed into an additional C unit running at shaft speed of 300 rpm to provide gentle mixing while the fat continues to crystallize from the alpha to beta prime form.

2. Food product according to claim 1 wherein the amount of fat is from 60 to 90 wt%.

3. Food product according to any of claims 1-2 which is fat continuous.

4. Food product according to any of claims 1-3 having a pH of from 4.8 to 6.2, preferably from 5 to 6.

5. Food product according to any of claims 1-4 wherein the amount of lecithin is from 0.1 to 0.7 wt%, preferably from 0.2 to 0.5 wt%.

6. Food product according to any of claims 1-5 wherein the amount of salt is from 1 to 5 wt%, preferably from 2 to 3 wt%.

7. Food product according to any of claims 1-6 which further comprises an acid, preferably citric acid.

8. Food product according to any of claims 1-7 comprising a protein, preferably selected from the group comprising milk protein, whey protein, skim milk powder, whey powder, sweet whey (powder), buttermilk or butter milk powder or a combination thereof.

9. Food product according to any of claims 1-8 further comprising an antioxidant, preferably selected from the group comprising propylgallate, tocopherol, ascorbic acid (ester) or a combination thereof.

10. Food product according to any of claims 1-9 wherein the amount of thickener is below 0.1 wt%, preferably the thickener is essentially absent.

11. Use of a food product according to any of claims 1-10 for shallow frying.

## Patentansprüche

1. Nahrungsmittelprodukt, das zum Flachbraten geeignet ist, umfassend 35 bis 90 Gewichts-% Fett, 8 bis 16 Gewichts-% (bezogen auf das gesamte Produktgewicht) eines Phytosterols, das ein Fettsäureester von beta-Sitostanol oder einem Derivat davon ist, eine wässrige Phase, Salz und Lecithin, **dadurch gekennzeichnet, dass** die Menge an Lecithin 0,1 bis 0,8 Gewichts-%, die Salzmenge 0,2 bis 5 Gewichts-% ist, dass der pH der wässrigen Phase 4,5 bis 6,5 ist und dass das Produkt gegebenenfalls ein Verdickungsmittel in einer Menge von höchstens 1 Gewichts-% umfasst, mit der Maßgabe, dass das Nahrungsmittelprodukt kein Aufstrich der folgenden Zusammensetzungen ist, der durch das folgende Verfahren hergestellt ist:
Aufstrich
| **Ingredienzien** | **%** |
|---|---|
| **Ölphase** | **40,00** |
| Canolaöl | 19,08 |
| Bohnenöl | 1,77 |
| partiell hydriertes Bohnenöl, Schmelzpunkt 42 °C | 5,70 |
| Lecithin | 0,22 |
| gesättigtes destilliertes Monoglycerid (Iodzahl <5) | 0,22 |
| Aromastoff | Spur |
| STEROLESTER | 13,01 |
| Vitamin A | 0,01 |
| | |
| **Wässrige Phase** | **60,00** |
| Wasser | 35,13 |
| Salz | 1,50 |
| Milchsäure | 0,09 |
| Kaliumsorbat | 0,11 |
| Calciumdinatrium-EDTA | 0,01 |
| Schweinegelatine | 2,00 |
| NOVOSOY^{®} 40 | 0,5 |
| SUPRO^{®} (Sojaproteinisolat) | 15 |
| beta-Tricalciumphosphat | 1,88 |
| Xanthangummi | 0,10 |
| künstliche Farbe Gelb 5 | 0,04 |
| Titandioxid | 0,28 |
| Vitaminmischung B6, B12 & E | 0,07 |
| | |
| Summe | 100,00 |
oder
Aufstrich mit niedrigem Calciumgehalt
| **Ingredienzien** | **Gew.-Teile** |
|---|---|
| **Ölphase** | **40,00** |
| Canolaöl | 19,08 |
| Bohnenöl | 1,77 |
| partiell hydriertes Bohnenöl, Schmelzpunkt 42 °C | 5,70 |
| Lecithin | 0,22 |
| gesättigtes destilliertes Monoglycerid (Iodzahl <5) | 0,22 |
| Aromastoff | Spur |
| STEROLESTER | 13,01 |
| Vitamin A | 0,01 |
| | |
| **Wässrige Phase** | **60,00** |
| Wasser | 35,13 |
| Salz | 1,50 |
| Milchsäure | 0,09 |
| Kaliumsorbat | 0,11 |
| Calciumdinatrium-EDTA | 0,01 |
| Schweinegelatine | 2,00 |
| NOVOSOY^{®} 40 | 0,5 |
| SUPRO^{®} (Sojaproteinisolat) | 15 |
| Xanthangummi | 0,10 |
| künstliche Farbe Gelb 5 | 0,04 |
| Titandioxid | 0,28 |
| Vitaminmischung B6, B12 & E | 0,07 |
wobei die Maßgabe auf diese Aufstriche, die durch das folgende Verfahren hergestellt werden, außer dass in dem Aufstrich mit niedrigem Calciumgehalt der Tricalciumphosphat-Zusatz weggelassen wird, Anwendung findet.
Die Ölphase wird hergestellt, indem das flüssige Öl und partiell hydriertes Bohnenöl in einem Tank auf 65 °C erwärmt werden. Die Emulgatoren, Lecithin und Monoglyceride werden gemischt und das Gemisch wird für 30 Minuten gehalten, um die Fettkristalle vollständig zu schmelzen.
Vitamin A, Aromastoff werden zu der erwärmten Ölphase gegeben.
Die wässrige Phase wird hergestellt, indem Xanthangummi zu dem Wasser mit 40 °C in einem Tank gegeben wird. Nach Hydratisieren des Gummis für 15 Minuten wird Tricalciumphosphat dispergiert. Alle anderen trockenen Ingredienzien werden zugesetzt und es wird mit einem Hochschermischer gemischt, um eine homogene wässrige Phase zu erhalten;
die Inhalte im Tank werden chargenweise pasteurisiert, indem sie auf 80 °C erwärmt werden und für 5 Minuten gehalten werden und auf 55 °C gekühlt werden.
Die Fett- und wässrige Phase werden bei etwa 50 °C in einem erwärmten Tank in einem Verhältnis von etwa 40 Teilen Fettphase zu 60 Teilen wässrige Phase erwärmt. Diese Emulsion hat eine kontinuierliche wässrige Phase. Diese Emulsion wird dann durch einen gekühlten Kratzwärmeaustauscher (A-Einhelt) geführt, wo die Emulsion auf eine Temperatur gekühlt wird, bei der das Fett zu kristallisieren beginnen wird (wenige Grad Celsius unter dem alpha-Punkt 4 °C) und die wässrige Phase zu gelieren beginnen wird, wenn die wässrige Phase die Geliermittel hat, und/oder nur eine Erhöhung der Viskosität gibt, wenn nur Verdickungsmittel in der wässrigen Phase vorliegen. Die gekühlte Emulsion wird dann in einen langsam gerührten Kristallisator mit variabler Geschwindigkeit (C*-Einheit) geführt wird, wo das Produkt aus einer Emulsion mit kontinuierlicher wässriger Phase in eine Emulsion mit kontinuierlicher Fettphase durch schnelles Erhöhen der Schaftgeschwindigkeit invertiert wird. Die Inversion wird durch Injizieren von 100 % Fett in das System unterstützt. Die C*-Einheit wird als die Inverter-Einheit bezeichnet. Die Invertergeschwindigkeit ist 1000 Upm.
Die Schaftgeschwindigkeit in der Inverter-Einheit hängt von ihren Abmessungen ab, variiert normalerweise aber von 200-2000 Upm. Die Emulsion mit kontinuierlicher Fettphase wird in eine zusätzliche C-Einheit geführt, die mit einer Schaftgeschwindigkeit von 300 Upm läuft, um ein leichtes Mischen bereitzustellen, während das Fett weiter von der alpha- zur beta-Hauptform kristallisiert.

2. Nahrungsmittelprodukt gemäß Anspruch 1, wobei die Fettmenge 60 bis 90 Gew.-% ist.

3. Nahrungsmittelprodukt gemäß einem der Ansprüche 1-2, das eine kontinuierliche Fettphase ist.

4. Nahrungsmittelprodukt gemäß einem der Ansprüche 1-3, das einen pH von 4,8 bis 6,2, vorzugsweise von 5 bis 6, hat.

5. Nahrungsmittelprodukt gemäß einem der Ansprüche 1-4, wobei die Menge an Lecithin von 0,1 bis 0,7 Gewichts-%, vorzugsweise von 0,2 bis 0,5 Gewichts-%, ist.

6. Nahrungsmittelprodukt gemäß einem der Ansprüche 1-5, wobei die Salzmenge 1 bis 5 Gewichts-%, vorzugsweise 2 bis 3 Gewichts-%, ist.

7. Nahrungsmittelprodukt gemäß einem der Ansprüche 1-6, das außerdem eine Säure, vorzugsweise Citronensäure, umfasst.

8. Nahrungsmittelprodukt gemäß einem der Ansprüche 1-7, das ein Protein, vorzugsweise ausgewählt aus der Gruppe, umfassend Milchprotein, Molkeprotein, Magermilchpulver, Molkepulver, Süßmolke (-pulver), Buttermilch oder Buttermilchpulver oder eine Kombination davon, umfasst.

9. Nahrungsmittelprodukt gemäß einem der Ansprüche 1-8, das außerdem ein Antioxidans, vorzugsweise ausgewählt aus der Gruppe, umfassend Propylgallat, Tocopherol, Ascorbinsäure (-ester) oder eine Kombination davon, umfasst.

10. Nahrungsmittelprodukt gemäß einem der Ansprüche 1-9, wobei die Menge an Verdickungsmittel unter 0,1 Gewichts-% liegt, das Verdickungsmittel vorzugsweise im Wesentlichen nicht vorhanden ist.

11. Verwendung eines Nahrungsmittelprodukts gemäß einem der Ansprüche 1-10 zum Flachbraten.

## Revendications

1. Produit alimentaire adapté à la friture plate, comprenant de 35 à 90 % en poids de matière grasse, de 8 à 16 % en poids (sur le poids de produit total) d'un phytostérol, qui est un ester d'acide gras de bêta-sitostanol ou un dérivé de celui-ci, une phase aqueuse, du sel et de la lécithine, **caractérisé en ce que** la quantité de lécithine est de 0,1 à 0,8 % en poids, la quantité de sel est de 0,2 à 5 % en poids, **en ce que** le pH de la phase aqueuse est de 4,5 à 6,5 et **en ce que** le produit comprend éventuellement un épaississant en une quantité d'au plus 1 % en poids, à condition que le produit alimentaire ne soit pas une pâte à tartiner ayant les compositions suivantes préparés par le procédé suivant :
*PÂTE À TARTINER*
| INGRÉDIENTS | % |
|---|---|
| PHASE HUILEUSE | 40,00 |
| Huile de colza | 19,08 |
| Huile de graines | 1,77 |
| Huile de graines partiellement hydrogénée, point de fusion 42°C | 5,70 |
| Lécithine | 0,22 |
| Monoglycéride distillé saturé (indice d'iode <5) | 0,22 |
| Arôme | Trace |
| ESTER DE STÉROL | 13,01 |
| Vitamine A | 0,01 |
| PHASE AQUEUSE | 60,00 |
| Eau | 35,13 |
| Sel | 1,50 |
| Acide lactique | 0,09 |
| Sorbate de potassium | 0,11 |
| EDTA calcique disodique | 0,01 |
| Gélatine de porc | 2,00 |
| NOVOSOY® 40 | 0,5 |
| SUPRO® (isolat de protéine de soja) | 15 |
| Bêta-phosphate de tricalcium | 1,88 |
| Gomme xanthane | 0,10 |
| Colorant artificiel Jaune 5 | 0,04 |
| Dioxyde de titane | 0,28 |
| Cocktail de vitamines B6, B12 & E | 0,07 |
| Total | 100,00 |
OU
*PÂTE À TARTINE À BASSE TENEUR EN CALCIUM*
| INGRÉDIENTS | Parties en poids |
|---|---|
| PHASE HUILEUSE | 40,00 |
| Huile de colza | 19,08 |
| Huile de graines | 1,77 |
| Huile de graines partiellement hydrogénée, point de fusion 42°C | 5,70 |
| Lécithine | 0,22 |
| Monoglycéride distillé saturé (indice d'iode <5) | 0,22 |
| Arôme | Trace |
| ESTER DE STÉROL | 13,01 |
| Vitamine A | 0,01 |
| PHASE AQUEUSE | 60,00 |
| Eau | 35,13 |
| Sel | 1,50 |
| Acide lactique | 0,09 |
| Sorbate de potassium | 0,11 |
| EDTA calcique disodique | 0,01 |
| Gélatine de porc | 2,00 |
| NOVOSOY® 40 | 0,5 |
| SUPRO® (isolat de protéine de soja) | 15 |
| Gomme xanthane | 0,10 |
| Colorant artificiel Jaune 5 | 0,04 |
| Dioxyde de titane | 0,28 |
| Cocktail de vitamines B6, B12 & E | 0,07 |
dans lequel la condition s'applique à ces pâtes à tartiner préparées par le procédé suivant, à part que l'ajout de phosphate de tricalcium est omis dans la pâte à tartiner à basse teneur en calcium. La phase huileuse est préparée par chauffage de l'huile liquide et de l'huile de graines partiellement hydrogénée dans une cuve jusqu'à 65°C. Les émulsifiants, la lécithine et les monoglycérides sont mélangés et le mélange est maintenu 30 minutes pour faire fondre complètement les cristaux de graisse.
La vitamine A et l'arôme sont ajoutés à la phase huileuse chauffée.
La phase aqueuse est préparée par ajout de la gomme xanthane à l'eau à 40°C dans une cuve. Après hydratation de la gomme pendant 15 minutes, le phosphate de tricalcium est dispersé.
Tous les autres ingrédients secs sont ajoutés et mélangés avec un mélangeur à fort cisaillement pour obtenir une phase aqueuse homogène. Le contenu de la cuve est pasteurisé en mode discontinu par chauffage jusqu'à 80°C, maintien pendant 5 minutes et refroidissement à 55°C.
Les phases grasse et aqueuse sont mélangées à environ 55°C dans une cuve chauffée dans un rapport d'environ 40 parties de phase grasse à 60 parties de phase aqueuse. Cette émulsion est continue dans l'eau. L'émulsion est ensuite passée dans un échangeur thermique à surface raclée, refroidie (unité A) où l'émulsion est refroidie jusqu'à une température à laquelle la graisse commence à cristalliser (quelques degrés C au-dessous du point alpha 4°C) et la phase aqueuse commence à gélifier, si la phase aqueuse contient des agents gélifiants, et/ou la viscosité augmente si seuls des agents épaississants sont présents dans la phase aqueuse. L'émulsion refroidie est ensuite passée dans un cristallisoir à vitesse variable, faiblement agité (unité C*) où le produit est inversé, passant d'une émulsion continue dans l'eau à une émulsion continue dans l'huile par augmentation rapide de la vitesse d'arbre. L'inversion est facilitée par l'injection de 100 % de graisse dans le système. L'unité C* est appelée unité inverseur. La vitesse de l'inverseur est de 1000 tours/minute.
La vitesse de l'arbre de l'unité inverseur dépend de ses dimensions mais varie normalement de 200 à 2000 tours/minute. L'émulsion continue dans l'huile est passée dans une autre unité C opérant à une vitesse d'arbre de 300 tours/minute pour permettre un mélange doux tandis que la graisse continue à cristalliser pour passer d'une forme primaire alpha à bêta.

2. Produit alimentaire selon la revendication 1, dans lequel la quantité de matière grasse est de 60 à 90 % en poids.

3. Produit alimentaire selon l'une quelconque des revendications 1 à 2, qui est continu dans l'huile.

4. Produit alimentaire selon l'une quelconque des revendications 1 à 3 ayant un pH de 4,8 à 6,2, de préférence, de 5 à 6.

5. Produit alimentaire selon l'une quelconque des revendications 1 à 4, dans lequel la quantité de lécithine est de 0,1 à 0,7 % en poids, de préférence, de 0,2 à 0,5 % en poids.

6. Produit alimentaire selon l'une quelconque des revendications 1 à 5, dans lequel la quantité de sel est de 1 à 5 % en poids, de préférence, de 2 à 3 % en poids.

7. Produit alimentaire selon l'une quelconque des revendications 1 à 6 qui comprend, en outre, un acide, de préférence, un acide citrique.

8. Produit alimentaire selon l'une quelconque des revendications 1 à 7 comprenant une protéine, de préférence, choisie dans le groupe comprenant la protéine de lait, la protéine de petit-lait, le lait écrémé en poudre, le petit-lait en poudre, le petit-lait doux (poudre), le babeurre ou le babeurre en poudre ou une combinaison de ceux-ci.

9. Produit alimentaire selon l'une quelconque des revendications 1 à 8 comprenant, en outre, un antioxydant, de préférence, choisi dans le groupe comprenant le gallate de propyle, le tocophérol, l'acide ascorbique (ester) ou une combinaison de ceux-ci.

10. Produit alimentaire selon l'une quelconque des revendications 1 à 9, dans lequel la quantité d'épaississant est inférieure à 0,1 % en poids, de préférence, l'épaississant est essentiellement absent.

11. Utilisation d'un produit alimentaire selon l'une quelconque des revendications 1 à 10 pour une friture plate.
